Europäisches Patentamt

European Patent Office

Office européen des brevets

(11) Veröffentlichungsnummer: **0 026 795**
**B1**

(12) **EUROPÄISCHE PATENTSCHRIFT**

(45) Veröffentlichungstag der Patentschrift: **18.05.83**

(51) Int. Cl.³: **E 06 B 3/20, B 29 D 27/00**

(21) Anmeldenummer: **79103858.1**

(22) Anmeldetag: **09.10.79**

(54) **Bauprofilleiste, insbesondere Profilleiste für die Herstellung von Fensterrahmen, sowie Verfahren zu ihrer Herstellung.**

(43) Veröffentlichungstag der Anmeldung:
**15.04.81 Patentblatt 81/15**

(45) Bekanntmachung des Hinweises auf die Patenterteilung:
**18.05.83 Patentblatt 83/20**

(84) Benannte Vertragsstaaten:
**AT BE CH DE FR GB IT NL SE**

(56) Entgegenhaltungen:
**DE - A - 2 061 946**
**DE - A - 2 162 194**
**DE - A - 2 544 793**
**DE - C - 1 086 032**
**DE - C - 1 161 005**
**DE - C - 1 704 750**
**FR - A - 1 279 732**
**US - A - 3 399 107**

**K. STOECKHERT "Kunststoff-Lexikon", 6.
Auflage, 1975, C. HANSER VERLAG, München
Seiten 328 bis 329**

(73) Patentinhaber: **Schock & Co. GmbH
Gmünder Strasse 65
D-7060 Schorndorf (DE)**

(72) Erfinder: **Schock, Karl
Aichenbachstrasse 136
D-7060 Schorndorf (DE)**
Erfinder: **Frank, Lothar
Schneeberg 51
D-7067 Plüderhausen (DE)**

(74) Vertreter: **Hoeger, Stellrecht & Partner
Uhlandstrasse 14c
D-7000 Stuttgart 1 (DE)**

## Bauprofilleiste, insbesondere Profilleiste für die Herstellung von Fensterrahmen sowie Verfahren zu ihrer Herstellung

Die Erfindung betrifft ganz allgemein Profilleisten zur Verwendung auf dem Bausektor, zum Beispiel für die Herstellung von Balkongeländern, jedoch handelt es sich insbesondere um Profilleisten für die Herstellung von Fensterrahmen. Dabei betrifft die Erfindung solche Leisten, die eine Hohlprofil aus einem thermoplastischen Kunststoff und einen in diesem angeordneten und mit der Hohlprofilwand verbundenen Leistenkern aufweisen, welcher zumindest teilweise aus an die Hohlprofilwand angrenzendem Kunststoff besteht.

Es sind schon zahlreiche Profilleisten für die Herstellung von Fensterrahmen bekannt, die einen aus einem thermoplastischen Kunststoff extrudierten Mantel in Form eines Kunststoff-Hohlprofils und einem Kern aus Naturholz, Preßspan, Metall oder Kunststoff besitzen. Sie erfüllen jedoch alle nicht die an eine Kunststoffenster gleichzeitig zu stellenden Forderungen hinsichtlich Festigkeit, Schall- und Wärmedämmung, Temperaturbeständigkeit und Beständigkeit gegen Verrottungs- und Korrosionserscheinungen sowie einer festen und dauerhaften Verbindung zwischen dem vom Kunststoff-Hohlprofil gebildeten Leitstenmantel und dem Leistenkern. In diesem Zusammenhang muß erwähnt werden, daß sich bei dem bekannten Profilleisten Abdichtungsprobleme an den Ecken eines aus solchen Leisten hergestellten Rahmens ergeben, weil entweder überhaupt kein Verbund zwischen dem Profilmantel und dem Leistenkern besteht oder dieser Verbund unter der Einwirkung von Temperaturschwankungen und/oder mechanischen Beanspruchungen nicht dauerhaft genug ist, so daß Wasser von den Stoßstellen an den Rahmenecken her in die Fugen zwischen äußeren Kunststoff-Hohlprofil und Leistenkern gelangen kann. Bei einem mangelhaften Verbund zwischen Hohlprofil und Leistenkern bildet sich außerdem zwischen diesen Teilen Kondenswasser, welches die Verrottungsgefahr erhöht.

So weist beispielsweise eine bekannte Profilleiste für die Herstellung von Fensterrahmen (FR—A—1,279,732) ein äußeres, im Extrusionsverfahren hergestelltes Hohlprofil aus PVC und eine Füllung auf, deren Matrix aus Epoxyharz besteht, in das Polystyrol-Schaumpartikel eingelagert sind. Die Praxis hat jedoch gezeigt, daß eine solche Profilleiste nicht die erforderliche Festigkeit und Dimensionsbeständigkeit bei Temperaturschwankungen aufweist und daß die Haftung des Epoxyharzes an dem den Profilmantel bildenden PVC-Hohlprofil nicht befriedigt. Zur Erhöhung der Biegesteifigkeit enthält die Füllung einer Ausfuhrungsform dieser bekannten Profilleiste massive Armierungsstangen, wobei jedoch erfahrungsgemäß der Verbund zwischen solchen Armierungsstangen und der Kunststoffmatrix Schwierigkeiten bereitet.

Bei einer anderen bekannten Profilleiste für die Herstellung von Fensterrahmen (DE—C—1,086,032) ist gleichfalls ein äußeres Kunststoff-Hohlprofil mit einer Füllung aus Steinholz oder Phenolharzmasse vorgesehen, wobei über das Material für das äußere Hohlprofil nichts ausgesagt wird. Geht man einmal davon aus, daß ein gängiger thermoplastischer Kunststoff wie PVC verwendet wird, so mangelt es dieser bekannten Profilleiste schon an dem notwendigen festen und dauerhaften Verbund zwischen äußerem Hohlprofil und der Füllung.

Es sind ferner einstückige Fenster- oder Türrahmen bekannt geworden (z.B. DE—C—1,161,005 und DE—C—1,704,750), welche einen äußeren Mantel aus glasfaserverstärktem Gießharz und einen Kern aus Schaumkunststoff besitzen. Da der Mantel im üblichen Handauflegeverfahren erzeugt werden soll, kann davon ausgegangen werden, daß als Verstärkung Glasfasergewerbe oder kurze, vereinzelte Glasfasern Verwendung finden. Auch hier hat die Praxis gezeigt, daß derartige Fensterrahmen nicht die erforderliche Festigkeit besitzen.

Schließlich ist noch ein Fensterrahmen bekannt geworden (DE—A—21 62 194), der einen mit Glasfaservlies oder Glasfasergewebe armierten PVC-Mantel und einen ebenfalls mit Glasfaservlies oder Glasfasergewebematten verstärkten Schaumkunststoffkern besitzt.

Da bei allen bekannten Fensterrahmen bisher das Problem, einen hinreichend festen und dauerhaften Verbund zwischen Profilmantel und Profilkern zu gewährleisten, nicht gelöst werden konnte, lag der Erfindung die Aufgabe zugrunde, eine insbesondere für die Herstellung von Fensterrahmen geeignete Bauprofilleiste zu schaffen, die einen mit dem äußeren Kunststoffmantel fest und dauerhaft verbundenen Kern besitzt. Ausgehend von Profilleisten der eingangs erwähnten Gattung wird diese Aufgabe erfindungsgemäß dadurch gelöst, daß der Leistenkern eine Matrix aus Polymethylmetacrylat-Schaum aufweist, der mit der Hohlprofilwand fest verbunden ist. Der Erfinder hat nämlich erkannt, daß das zur Herstellung des Profilleistenkerns in das Hohlprofil eingefüllte Methylmetacrylat gegenüber den herkömmlichen thermoplastischen Kunststoffen und insbesondere gegenüber dem für den Leistenmantel bevorzugten PVC aggressiv ist und so zu einer Vernetzung und damit zu einem außerordentlich guten Verbund zwischen Leistenkern und Kunststoffmantel der Profilleiste führt. Außerdem besitzt Polymethylmetacrylat-Schaum eine hohe Festigkeit, ein gutes Schall- und Wärmedämmvermögen und es ist chemisch außerordentlich stabil. Dank der guten Haftung des Leistenkerns an dem den Leistenmantel bildenden Hohlprofil muß bei der Herstellung eines Rahmens aus der erfindungsgemäßen Profilleiste an den Rahmenecken auch kein besonderer Aufwand bei der Kantenabdichtung geleistet werden, da Feuchtigkeit auch von den Ecken her nicht zwischen Hohlprofil und Leistenkern eindringen kann. Der duroplastische Kern (bestehend aus Polymethylmetacrylat sowie gegebenenfalls Füllstoffen) der erfindungsgemäßen Profilleiste führt fener dazu, daß auch bei verhältnismäßig hohen Außentemperaturen keinerlei Wärmeverformungen auftreten, und wegen der hohen Festigkeit des Leistenkerns kann die Wandstärke des äußeren Hohlprofils besonders klein gemacht werden (sie beträgt bei einer bevorzugten Ausführungsform nur noch ca. 1 mm). Das erfindungsgemäß verwendete Methylmetacrylat führt aber nicht nur zu einem guten Verbund zwischen Hohlprofil und Leistenkern, sondern es eröffnet auch die Möglichkeit, die Wirksamkeit von in den Leistenkern eingebetteten Armierrungselementen zu erhöhen, da sich mit Methylmetacrylat ein besonders fester und dauerhafter Verbund zwischen derartigen Armierungselementen und dem übrigen Leistenkern erzeugen läßt.

Obwohl sich für das den Leistenmantel bildende Hohlprofil PVC besonders empfiehlt, können grundsätzlich auch andere thermoplastische Kunststoffe für den Leistenmantel verwendet werden, so zum Beispiel Acrylnitrylbutadienstyrol Styrolacryinitryl oder Acrylharz, welches absolut witterungsunempfindlich ist. Das bisher als Gießharz völlig unübliche Methylmetacrylat hat nämlich den großen Vorzug, daß es mit praktisch allen thermoplastischen Kunststoffen einen außerordentlich guten Verbund eingeht, so daß es mit Hilfe der erfindungsgemäßen Lösung überraschenderweise gelang, das bisherige Hauptproblem der Kunststoffensterhersteller zu lösen, nämlich eine absolut sichere und dauerhafte Verbindung zwischen dem äußeren Kunststoffmantel und dem Profilleistenkern herbeizuführen.

Bei einer bevorzuggen Ausführungsform der erfindungsgemäßen Bauprofilleiste sind in den Polymethylmetacrylat-Schaum in Leistenlängsrichtung verlaufende Armierungselemente in Form von Fäden oder Fasersträngen eingebettet, die im Abstand von der neutralen Fasern des Leistenquerschnitts verlaufen. Durch diese Anordnung wird eine maximale Wirksamkeit der Armierungselemente hinsichtlich der Erhöhung der Beigesteifigkeit der Profilleiste bewirkt.

Besonders empfehlenswert ist es, vorgespannte Armierungselemente in den Leistenkern einzulegen, so daß die fertige Profilleiste dadurch auszeichnet, daß die Armierungselemente nach dem Aushärten des Leistenkerns unter einer Längszugspannung stehen oder höchstens zugspannungsfrei sind. Die Vorspannung der Armierungselemente beim Einlegen bewirkt, daß sie (bei hinreichender Vorspannung) trotz des Schrumpfens des Kernkunststoffs in der fertigen Profilleiste nicht unter Druckbeanspruchung stehen, so daß sie bei einer Biegebeanspruchung der Profilleiste schon bei geringen Biegungen Voll wirksam werden.

Zweckmäßigerweise werden dem Methylmetacrylat Feinstfüllstoffe wie Aluminiumhydroxidpulver, Quarzpulver, Kreide oder dergleichen beigegeben, um den Harzverbrauch und das Schrumpfen zu senken, die Festigkeit, das Schalldämpfvermögen etc. jedoch zu erhöhen.

Für die Armierung empfehlen sich besonders Glasfaserrovings, jedoch können auch andere anorganische oder organische Fasermaterialien Verwendung finden, sofern sie die notwendige Zugfestigkeit aufweisen, so zum Beispiel Kohlenstoff-, Polyamid-, Sisal- und Kevlar-Fasern.

Zur Herstellung der erfindungsgemäßen Profilleiste empfiehlt sich ein Verfahren, bei dem ein Hohlprofil aus einem thermoplastischen Kunststoff extrudiert, in dieses unter einer Längszugspannung stehende Faserstränge eingelegt und das Hohlprofil mit Polymethylmetacrylat-Schaum gefüllt wird. Die Vorspannung der Faserstränge bzw. der einzelnen Fasern wird dabei so gewählt, daß die Fasern nach dem Auspolymerisieren des Methylmetacrylats und dem damit einhergehenden Schrumpfen keinesfalls unter einer Druckbeanspruchung stehen, sondern entweder immer noch eine Längszugspannung aufweisen oder höchstens spannungslos sind.

Zur Erzeugung der Vorspannung kann man so vorgehen, daß die Faserstränge beim Extrudieren des Hohlprofils in dieses eingelegt und dabei abgebremst werden, um die Längszugspannung aufzubringen. Eine zweite Möglichkeit, die den apparativen Aufwand verringert, besteht darin, in das Hohlprofil als Armierung Kunstharzstäbe einzulegen, die in einer Kunstharzmatrix die unter einer Längszuspannung stehenden Fäden oder Fasern enthalten.

Weitere Merkmale, Vorteile und Einzelheiten der Erfindung ergeben sich aus der nachfolgenden Beschreibung und der beigefügten zeichnerischen Darstellung einer bevorzugten Ausführungsform der erfindungsgemäßen Profilleiste sowie einer Anlage zur Durchführung des erfindungsgemäßen Verfahrens; es zeigen:

Fig. 1: einen Schnitt durch die Profilleiste, die für die Herstellung eines Fensterrahmens vorgesehen ist, und

Fig. 2: eine schematische Darstellung einer Anlage zur kontinuierlichen Herstellung einer erfindungsgemäßen Profilleiste.

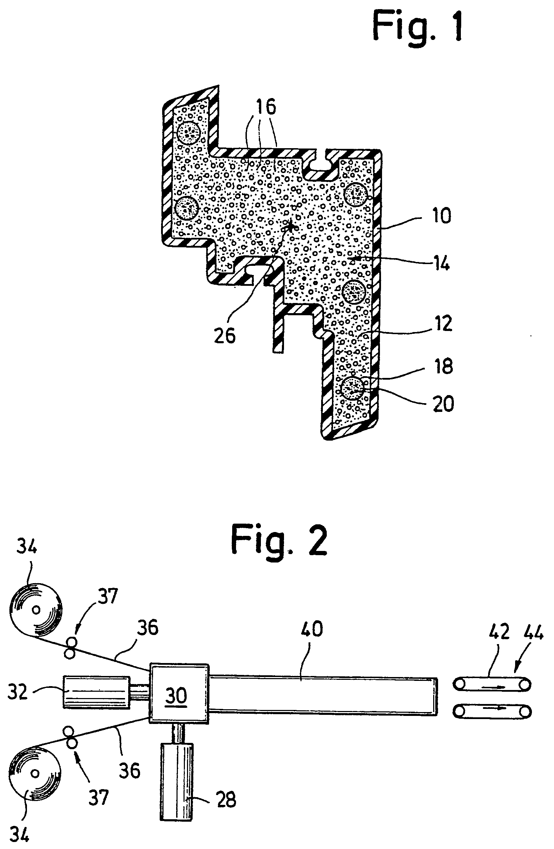

Die in Fig. 1 dargestellte Profilleiste weist einen aus einem thermoplastischen Kunststoff als Hohlprofil extrudierten Mantel 10 mit einer einen Leistenkern 12 bildenden Füllung auf. Die Matrix des Leistenkerns besteht aus geschäumten Polymethylmetacrylat 14, welches Füllstoffpartikel 16 enthält. Ferner besitzt diese Profilleiste in die Matrix des Leistenkerns 12 eingebettete Armierungstäße 18, bei denen es sich um vorgefertigte Elemente handelt. Sie werden vorzugsweise etwa zur Hälfte von den Glasfäden 20 von Glasrovings sowie zur Hälfte von einem Harz, insbesondere Polyester, gebildet, in das die Glasfaserrovings eingebettet werden, solange sie unter einer Längszugspannung stehen, wobei diese Zugspannung so groß gewählt wird, daß die Glasfäden nach dem Aushärten des Harzes der Armierungsstäbe 18 und dem Polymerisieren des die Matrix des Leistenkerns 12 bildenden Methylmetacrylats nach wie vor unter einer Längszugspannung stehen oder höchstens spannungsfrei sind, keinesfalls aber auf Druck beansprucht werden. Erfindungsgemäß sind die Armierungsstäbe 18 im größmöglichen Abstand von der neutralen Faser des Profilquerschnits angeordnet—für die zeichnerische Darstellung soll angenommen werden, daß die neutrale Faser ungefähr an der mit dem Kreuz 26 versehenen Stelle verläuft.

Während bei der Herstellung der Profilleiste gemäß Fig. 1 zweckmäßigerweise so vorgegangen wird, daß man das den Kunststoffmantel 10 bildende Hoylprofil kontinuierlich exrrudiert, dann aber diskontinuierlich weiterarbeitet, zeigt die Figur 2 eine Anlage, mit der eine erfindungsgemäße Profilleiste Kontinuierlich hergestellt werden kann, wobei die der Armierung dienenden Fäden, Faserstränge oder dergleichen jedoch unmittelbar in die Matrix des Leistenkerns eingebettet werden.

Die Fig. 2 zeigt die Anlage in der Draufsicht. Sie besitzt einen ersten Extruder 28 zum Extrudieren schmelzflüssigen PVCs, welches in einem Extrusionswerkzeug 30 zu dem den Kunststoffmantel bildenden Hohlprofil geformt wird. In dieses preßt ein Extruder 32 kaltes Methylmetacrylat, welches ein Schäumungsmittel enthält, so daß es in dem beheizten Extrusionswerkzeug 30 aufgeschäumt wird. Gleichzeitig werden von Spulen 34 Glasrovings 36 abgezogen und mit Hilfe des Extrusionswerkszeugs 30 in die Füllung des äußeren Kunststoff-Hohlprofils eingelegt. Extrusionswerkzeuge, mit denen ein äußerer Kunststoffmantel geformt, in diesen kontinuierlich Verstärkungen eingelegt werden können und der vom Mantel gebildete Hohlraum mit einer Füllung versehen werden kann, sind bekannt, so daß sie hier nicht näher geschildert zu werden brauchen.

In einer Kalibrierbüchse 40 wird unter gleichzeitigem Aushärten des äußeren Hohlprofils und der den Leistenkern bildenden Füllung die Profilleiste kalibriert, so daß sie mit Hilfe von angetriebenen Bändern oder Raupen 42 einer als Ganzes mit 44 bezeichneten Abzugsvorrichtung abgezogen werden kann. Diese Abzugsvorrichtung bringt zusammen mit an den Glasrovings 26 angreifenden Bremsen 37 die Längszugspannung auf die Glasrovings auf.

Dadurch, daß das Material für die Matrix des Leistenkerns dem äußeren Kunststoff-Hohlprofil unter Druck zugeführt wird, erübrigt sich eine aufwendige Vakuumkalibrierung des Hohlprofils.

Preßt man das Methylmetacrylat in das noch heiße Hohlprofil, so kann das Methylmetacrylat kalt zugeführt werden, da es an der heißen Wand des äußeren Hohlprofils zu polymerisieren beginnt. Dies ist in verschiedner Hinsicht vorteilhaft, unter anderem deshalb, weil dann das kalte Methylmetacrylat das äußere Hohlprofil kühlt; außerdem härtet aber die Füllung zunächst an der Innenseite des Hohlprofils aus, so daß die Wand der Profilleiste auch bei geringsten Wandstärken des äußeren Hohlprofils besonders glatt wird.

Wenn vorstehend von in Leistenlängsrichtung verlaufenden Fäden oder Fasern die Rede ist, so soll darunter verstanden werden, daß die Fäden oder Fasern im Gegensatz zu den üblicherweise zur Verstärkung verwendeten, regellos angeordneten Wirrfasern oder -fäden regelmäßig orientiert sind und in Leistenlängsrichtung verlaufen.

**Patentansprüche**

1. Bauprofilleiste, insbesondere Profilleiste für die Herstellung von Fensterrahmen, mit einem Hohlprofil (10) aus einem thermoplastischen Kunststoff und einem in diesem angeordneten und mit der Hohlprofilwand verbundenen Leistenkern (12), der zumindest teilweise aus an die Hohlprofilwand angrenzendem Kunststoff besteht, dadurch gekennzeichnet, daß der Leistenkern (12) eine Matrix aus Polymethylmetacrylat-Schaum (14) aufweist, der mit der Hohlprofilwand fest verbunden ist.

2. Leiste nach Anspruch 1, dadurch gekennzeichnet daß in den Polymethylmetacrylat-Schaum in Leistenlängsrichtung verlaufende Armierungselemente in Form von Fäden oder Fastersträngen eingebettet sind, die im Abstand von der neutralen Faser des Leistenquerschnitts verlaufen.

3. Leiste nach Anspruch 2, dadurch gekennzeichnet, daß die Armierungselemente nach dem Aushärten des Leistenkerns unter einer Längszugspannung stehen oder nöchstens zugspannungsfrei sind jedoch nicht unter einer Druckspannung stehen.

4. Leiste nach einem oder mehreren der Ansprüche 1 bis 3, dadurch gekennzeichnet, daß das geschäumte Polymethylmetacrylat Feinstfüllstoffe (16) wie Aluminiumhydroxidpulver, Quarzpulver, Kreide oder dergleichen enthält.

5. Leiste nach einem oder mehreren der Ansprüche 2 bis 4, dadurch gekennzeichnet, daß die Faserstränge Glasfaserrovings sind.

6. Leiste nach einem oder mehreren der Ansprüche 2 bis 5, dadurch gekennzeichnet, daß die Armierungselemente Kunstharzstäbe (18) sind, in die unter einer Längszugspannung stehende Fäden oder Fasern eingebettet sind.

7. Verfahren zur Herstellung einer Leiste nach Anspruch 3, dadurch gekennzeichnet, daß ein Hohlprofil aus einem thermoplastischen Kunststoff extrudiert, in dieses unter einer Längszugspannung stehende Faserstränge eingelegt und das Hohlprofil mit Polymethylmetacrylat-Schaum gefüllt wird.

8. Verfahren nach Anspruch 7, dadurch gekennzeichnet, daß die Faserstränge beim Extrudieren des Hohlprofils in dieses eingelegt und dabei abgebremst werden, um die Längszugspannung aufzubringen.

9. Verfahren nach Anspruch 7 oder 8, dadurch gekennzeichnet, daß in das noch heiße Hohlprofil Methylmetacrylat hineingepreßt wird.

10. Verfahren nach Anspruch 9, dadurch gekennzeichnet, daß das Methylmetacrylat in zumindest nahezu kaltem Zustand in das Hohlprofil eingebracht wird.


## Revendications

1. Barre profilée de construction, en particulier barre profilée pour la fabrication de châssis de fenêtres, comprenant un profilé creux (10) en substance synthétique thermoplastique et un noyau (12) agencé dans ce profilé creux et relié à la paroi du profilé creux, ce noyau étant constitué au moins partiellement à base d'une substance synthétique accolée sur la paroi du profilé creux, caractérisée en ce que le noyau (12) présente une matrice en mousse de polyméthacrylate de méthyle (14) qui est reliée de manière fixe à la paroi du profilé creux.

2. Barre suivant la revendication 1, caractérisée en ce que des éléments d'armature s'étendant suivant la direction longitudinale de la barre et se présentant sous la forme de fils ou d'écheveaux de fibres sont noyés dans la mousse de polyméthacrylate de méthyle et s'étendent à distance de la fibre neutre de la section transversale de la barre.

3. Barre suivant la revendication 2, caractérisée en ce que les éléments d'armature, après le durchissage du noyau, se trouvent soumis à un effort de tension longitudinale ou au maximum sont exempts de tension longitudinale, et en ce que cependant ils ne sont pas soumis à un effort de compression.

4. Barre suivant l'une quelconque des revendications 1 à 3, caractérisée en ce que le polyméthacrylate de méthyle mousse contient des substances de remplissage très fines (16), telles que de la poudre d'hydroxyde d'aluminium, de la poudre de quartz, de la craie ou des substances analogues.

5. Barre suivant l'une quelconque des revendications 2 à 4, caractérisé en ce que les écheveaux de fibres sont des rovings de fibres de verre.

6. Barre suivant l'une quelconque des revendications 2 à 5, caractérisée en ce que les éléments d'armature sont des tiges de substance synthétique (18) dans lesquelles sont noyés des fils ou fibres soumis à un effort de tension longitudinale.

7. Procédé de préparation d'une barre suivant la revendication 3, caractérisé en ce qu'un profilé creux est extrudé à partir d'une substance synthétique thermoplastique, en ce que des écheveaux de fibres soumis à un effort de tension longitudinale sont insérés dans le profilé creux et en ce que ce dernier est rempli par de la mousse de polyméthacrylate de méthyle.

8. Procédé suivant la revendication 7, caractérisé en ce que les écheveaux de fibres sont insérés dans le profilé creux au cours de son extrusion et sont freinés pour appliquer l'effort de tension longitudinale.

9. Procédé suivant l'une ou l'autre des revendications 7 et 8, caractérisé en ce que du méthacrylate de méthyle est introduit par pressage dans le profilé creux encore chaud.

10. Procédé suivant la revendication 9, caractérisé en ce que le méthacrylate de méthyle est introduit dans le profilé creux à l'état au moins presque froid.


## Claims

1. Structural profiled strip, in particular profiled strip for the manufacture of window frames, having a hollow section (10), consisting of a thermoplastic plastics material, and a strip core (12) which is disposed in the hollow section (10), is connected to the hollow section wall, and consists at least partially of plastics material bordering on the hollow section wall, characterized in that the strip core (12) comprises a matrix of polymethyl methacrylate foam (14) which is rigidly connected to the hollow section wall.

2. Strip according to Claim 1, characterized in that reinforcement elements in the form of threads or fibre strands are embedded in the polymethyl methacrylate foam, extend in the longitudinal direction of the strip, and extend at a distance from the neutral fibres of the cross-section of the strip.

3. Strip according to Claim 2, characterized in that the reinforcement elements, after hardening of the strip core, are under a longitudinal tensile stress or are at most free from tensile stress, but are not under compressive stress.

4. Strip according to one or more of the Claims 1 to 3, caracterized in that the foamed polymethyl methacrylate contains superfine filling material (16) such as aluminium hydroxide powder, quartz powder, chalk or the like.

5. Strip according to one or more of Claims 2 to 4, characterized in that the fibre strands are glass fibre rovings.

6. Strip according to one or more of Claims 2 to 5, characterized in that the reinforcement elements are synthetic resin rods (18) in which threads or fibres which are under longitudinal tensile stress are embedded.

7. Method of manufacturing a strip according to Claim 3, characterized in that a hollow section is extruded from a thermoplastic plastics material, fibre strands which are under longitudinal tensile stress are inserted in it, and the hollow section is filled with polymethyl methacrylate foam.

8. Method according to Claim 7, characterized in that, as the hollow section is extruded, the fibre strands are inserted therein and are braked in order to apply the longitudinal tensile stress.

9. Method according to Claim 7 or 8, characterized in that methyl methacrylate is pressed into the hollow section while it is still hot.

10. Method according to Claim 9, characterized in that the methyl methacrylate is placed in the hollow section in an at least approximately cold state.

# Fig. 1

# Fig. 2